**Europäisches Patentamt**

**European Patent Office**

**Office européen des brevets**

(11) Veröffentlichungsnummer: **0 019 137 B1**

(12) **EUROPÄISCHE PATENTSCHRIFT**

(45) Veröffentlichungstag der Patentschrift:
**18.04.84**

(51) Int. Cl.³: **G 01 L 3/22**, G 06 F 15/353

(21) Anmeldenummer: **80102300.3**

(22) Anmeldetag: **28.04.80**

(54) **Verfahren zur Bestimmung des Verlustmomentes bei einem Drehmoment-Istwertrechner und Drehmoment-Istwertrechner für Prüfstände.**

(30) Priorität: **16.05.79 DE 2919787**

(43) Veröffentlichungstag der Anmeldung:
**26.11.80 Patentblatt 80/24**

(45) Bekanntmachung des Hinweises auf die Patenterteilung:
**18.04.84 Patentblatt 84/16**

(84) Benannte Vertragsstaaten:
**CH DE FR GB IT LI SE**

(56) Entgegenhaltungen:
**DE - A - 2 816 734**
**US - A - 3 955 410**
**US - A - 3 996 456**

(73) Patentinhaber: **SIEMENS AKTIENGESELLSCHAFT, Berlin und München Wittelsbacherplatz 2, D-8000 München 2 (DE)**

(72) Erfinder: **Dombrowski, Kurt, Leitensteig 28, D-8520 Erlangen (DE)**
Erfinder: **Gebauer, Wolfgang, Dipl.-Ing., Lachner Strasse 69, D-8520 Erlangen (DE)**
Erfinder: **Polster, Herbert, Görlitzer Strasse 10, D-8520 Erlangen (DE)**
Erfinder: **Steffen, Lothar, Föhrenweg 44, D-8550 Forchheim (DE)**

ACTORUM AG

## Verfahren zum Bestimmen des Verlustmomentes bei einem Drehmoment-Istwertrechner und Drehmoment-Istwertrechner für Prüfstände

Die Erfindung bezieht sich auf ein Verfahren nach dem Oberbegriff des Anspruches 1 und einen Drehmoment-Istwertrechner nach dem Oberbegriff des Anspruchs 3.

Hiermit wird auf ein Verfahren Bezug genommen, wie es beispielsweise im Dokument DE-C-2 144 438 näher beschrieben ist.

Bei diesem bekannten Rechner, der im Zusammenhang mit einer Gleichstromnebenschluss-Pendelmaschine benutzt wird, sind zur Bestimmung der einzelnen Momentanteile analoge Rechenglieder vorgesehen, die unter Verwendung integrierter Linearverstärker aufgebaut sind. In diesen Rechengliedern werden u.a. aus der Multiplikation von Konstanten mit der Drehzahl und dem Quadrat der Drehzahl proportionalen Grössen Ersatzwerte für die Verlustwerte gebildet.

Derartige analoge Rechner haben sich im Zusammenhang mit Gleichstrompendelmaschinen für die Erprobung von Fahrzeugaggregaten, wie z.B. Motoren, Getrieben und Wandlern auf Prüfständen gut bewährt.

Neben komfortableren Erprobungsprüfständen gibt es auch einfachere Prüfstände, bei denen sich der Aufwand einer Gleichstrompendelmaschine nicht lohnt, sondern eine normale hochtourige Gleichstrommaschine verwendet werden soll. In einem solchen Fall ist die Einstellung und Justierung des vorstehend beschriebenen Analogrechners etwas schwierig, da das zur Justierung dienende Vergleichsnormal, die Pendelmaschine, fehlt.

Dies gilt auch für einen ähnlich aufgebauten elektronischen Istwertrechner (vgl. DE-A-2 816 734) zur Ermittlung des Drehmoments von Gleichstrommaschinen, bei dem die drehzahlabhängigen Verluste in Reibungs- und Eisenverluste unterteilt sind und rechnerisch aus der Multiplikation von Konstanten mit drehzahlabhängigen Werten ermittelt werden. Abgesehen davon, dass sich diese Konstanten betriebsbedingt auch ändern können, ist ihre prüfstandseitige Ermittlung mit dem Istwertrechner nicht möglich, da dieser die drehzahlabhängigen Verluste nicht unterscheiden kann.

Die Aufgabe der vorliegenden Erfindung besteht darin, ein einfaches Verfahren anzugeben, mit dem mittels des Istwertrechners das Verlustmoment bestimmt werden kann.

Diese Aufgabe wird erfindungsgemäss durch die kennzeichnenden Merkmale des Anspruchs 1 gelöst. Schaltungsmässig lässt sich die Aufgabe relativ einfach durch die kennzeichnenden Merkmale des Anspruchs 3 lösen.

Durch diese vorgenannte Trennung in Leerlaufverluste und stromabhängige Zusatzverluste – ohne Rücksicht darauf, wie sich die einzelnen Werte zusammensetzen – ist eine besondere Eichvorrichtung am Prüfstand nicht mehr erforderlich. Die stromabhängigen Zusatzverluste, wie z.B. Zahnsättigung, Kommutierungsverluste, ändern sich nicht und können vom Hersteller der Maschine erfragt werden. Die Leerlaufverluste lassen sich auf einfachste Weise beim Einrichten des Prüfstandes durch einen Leerlaufversuch ermitteln; sie können gegebenenfalls in grösseren Abständen immer wieder neu festgestellt werden.

Liegen die vorgenannten Werte – jeweils bezogen auf die Drehzahl – vor, so kann während des Betriebes des Prüfstandes das Verlustmoment bestimmt und zu den sonstigen berechneten Momenten addiert werden. Um Speicherplatz zu sparen, kann man die Zahl der abzuspeichernden Wertepaare beschränken und die Zwischenwerte durch Interpolation bestimmen. Hinsichtlich der stromabhängigen Zusatzverluste lässt sich eine zusätzliche Einsparung an Speicherplatz noch dadurch erreichen, dass nur die Zusatzverluste für den Nennstrom abgespeichert sind und die Werte für abweichende Ströme aus dem Verhältnis der Stromquadrate bestimmt werden. Es kann nämlich davon ausgegangen werden, dass die Zusatzverluste und damit das Zusatzmoment vom Quadrat des Stromes abhängig ist.

Anhand einer Zeichnung sei die Erfindung näher erläutert; es zeigen:

Fig. 1 die Kennlinie von Leerlaufverlustmoment $M_L$ aufgetragen über der Drehzahl;

Fig. 2 die Kennlinie des stromabhängigen Zusatzmomentes $M_z$ – aufgetragen über der Drehzahl und

Fig. 3 ein Blockschaltbild des digitalen Drehmomentenrechners.

Die grundlegende Beziehung zwischen den gemessenen und gespeicherten Grössen und dem zu errechnenden mechanischen Moment lautet:

$$M_d = M_{EL} \pm M_O \pm M_L \pm M_Z$$

wobei das elektrische Moment $M_{EL}$ proportional dem Produkt aus EMK $E \times$ dem Ankerstrom I dividiert durch die Drehzahl n ist. Das Beschleunigungsmoment $M_O$ ist der Beschleunigung oder Verzögerung $\frac{dn}{dt}$ und der zu beschleunigenden Masse proportional. Das Leerlaufverlustmoment $M_L$ ist u.a. von der Reibung, den Eisenverlusten und der Magnetisierung abhängig. Das Zusatzmoment $M_Z$ ist stromabhängig und u.a. von den Kommutierungsverlusten und Zahnsättigungsverlusten abhängig.

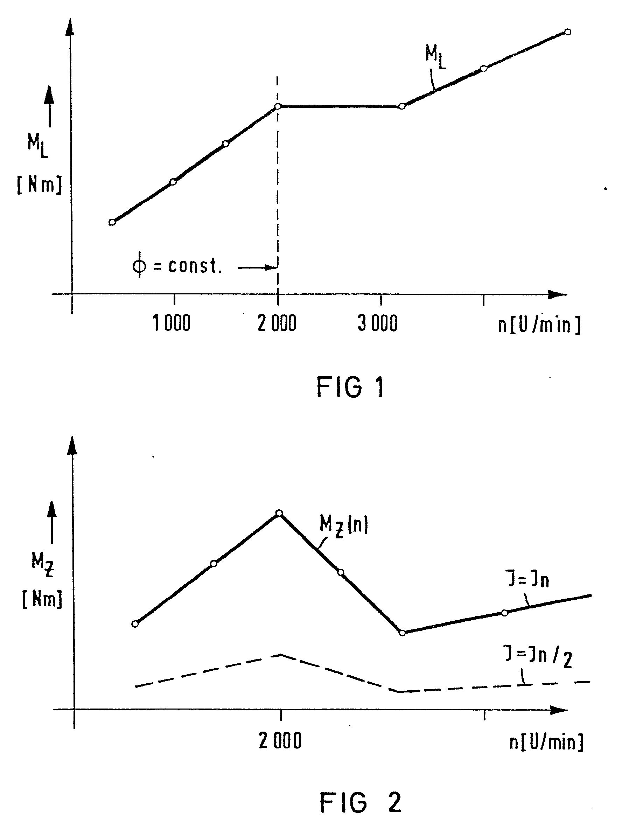

Fig. 1 zeigt den beispielsweisen Verlauf des Leerlaufverlustmomentes $M_L$ einer Gleichstromnebenschlussmaschine, aufgetragen über der Drehzahl n, wobei im Bereich bis zu einer Umdrehungszahl von zweitausend Umdrehungen pro Minute der Fluss und darüber die EMK als konstant vorausgesetzt wird.

In einem Leerlaufversuch, bei dem mechanisches Moment, Beschleunigungsmoment und Zusatzverluste Null oder vernachlässigbar klein sind, gilt: $M_{EL} = M_L$. Im Abstand von z.B. 10% der Nenndrehzahl werden die jeweils zusammengehörenden Werte der Drehzahl n und des Leerlaufverlustmomentes $M_L$ mit dem Drehmomentrechner erfasst und abgespeichert. Die abgespeicherten Werte sind durch die kleinen Kreise angedeutet. Die Werte zwischen den einzelnen Punkten können dann durch Linearinterpolation mit ausreichender Genauigkeit festgelegt werden.

Fig. 2 zeigt das stromabhängige Zusatzverlustmoment $M_Z$ aufgetragen über der Drehzahl n, und zwar für den Fall des Nennstromes $I_n$. Da die Zusatzverluste und damit das Zusatzverlustmoment vom Quadrat des Stromes abhängig ist, ergibt sich bei halbem Nennstrom $I_{n/2}$ der gestrichelt gezeichnete Kurvenverlauf mit einem Viertel des Momentes. Aus dem Kurververlauf für den Nennstrom kann also durch einfache Umrechnung der jeweilige Kurvenverlauf für die anderen Ströme bestimmt werden.

Zur Rekonstruktion der Kurve $M_Z$ werden ebenfalls zusammengehörige Werte vom $M_Z$ und n abgespeichert und Zwischenwerte durch Interpolation errechnet.

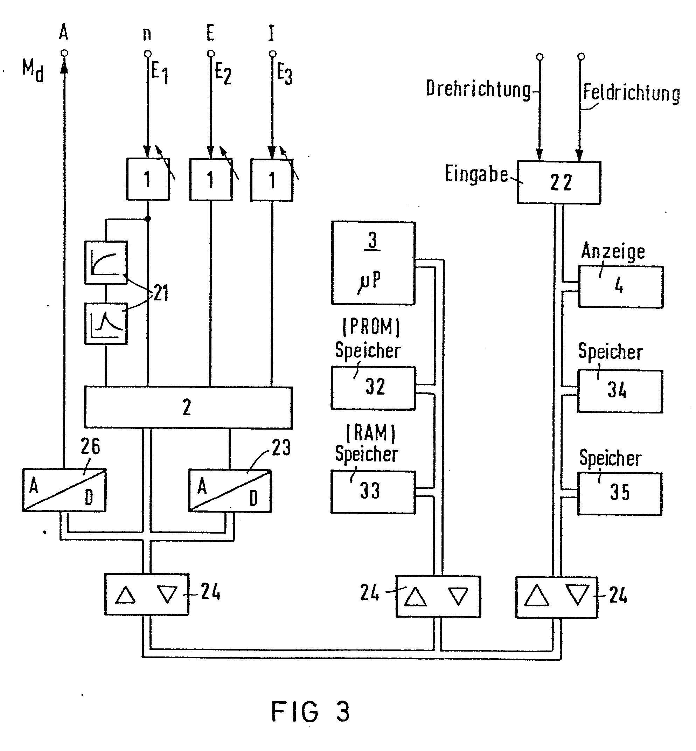

Wie aus dem Blockschaltbild des digitalen Drehmomentrechners in Fig. 3 ersichtlich, liegen an den Eingängen E1, E2, E3 dieses Rechners der Drehzahl n, dem Ankerstrom I und der EMK E proportionale elektrische Signale an. Diese Signale werden in Verstärkern 1 normiert und über einen analogen Multiplexer 2, einen Analog-Digitalumsetzer 23 und Treiberstufen 24 einem Mikroprozessor 3 mit Arbeitsspeicher 33 und Programmspeicher 32 zugeführt. Die einzelnen Werte von Strom, Spannung und Drehzahl werden dabei nach dem Analog-Digital-Umsetzer 23 mit gespeicherten Wichtungsfaktoren für ihre Berücksichtigung in der Momentengleichung versehen.

Der Mikroprozessor 3 berechnet entsprechend dem im Programmspeicher 32 (PROM) niedergelegten Programm – gemäss der vorstehend angegebenen Formel für das mechanische Wellendrehmoment – das Wellendrehmoment aus den einzelnen Werten und berücksichtigt dabei die im Speicher 34 niedergelegten Werte für das Zusatzverlustmoment $M_Z$ und die in einem weiteren Speicher 35 niedergelegten Wertepaare von Leerlaufverlustmoment $M_L$ und Drehzahl n. Je nach der jeweils am Eingang vorliegenden Drehzahl n und dem Strom I werden dann die erforderlichen Werte aus den Speichern abgerufen und zur Bildung des mechanischen Wellendrehmomentes verwendet. Am Eingang des analogen Multiplexers 2 ist noch ein Differenzierglied 21 vorgesehen, mit dem ein dem zeitlichen Differentialquotienten $\frac{dn}{dt}$ der Drehzahl n proportionaler Wert für das Beschleunigungsmoment gebildet werden kann.

Das über den Mikroprozessor 3 errechnete mechanische Wellendrehmoment $M_d$ wird über Digital-Analog-Umsetzer 26 am Ausgang A als analoges Signal ausgegeben. Die Zyklusdauer zwischen den jeweils neu ermittelten Werten kann dabei z.B. eine Millisekunde betragen. Die ermittelten und errechneten Werte für das mechanische Wellendrehmoment können auch noch über eine digitale Anzeige 4 angezeigt werden. Diese digitale Anzeige wird auch dazu verwendet, um die Wichtungsfaktoren einzugeben. Die Bunäreingänge der Eingabe 22 dienen zur Vorgabe der Vorzeichen der Momentengleichung. Wie bereits bemerkt, liegen die Werte für das Zusatzmoment $M_Z$, das aus den Zusatzverlusten stammt, von vornherein fest, diese Werte können also von vornherein in einem Festwertspeicher 34 übernommen werden. Für die im Leerlaufversuch ermittelten und sich gegebenenfalls ändernden Werte des Leerlaufverlustmomentes muss dagegen ein programmierbarer Speicher 35 vorgesehen sein, dessen Programmierung gegebenenfalls auch entsprechend neuen Werten zu ändern ist. Das Einrichten des Speichers für die Leerlaufverlustmomente kann dabei derart vorgenommen werden, dass beim Inbetriebsetzen der Anlage die im Leerlaufversuch ermittelten und errechneten Werte für das mechanische Wellendrehmoment in Verbindung mit der jeweils zugehörigen Drehzahl in diesen Speicher übernommen werden. Da das Leerlaufmoment dem Strom proportional ist, genügt es auch, die entsprechenden Stromwerte abzuspeichern.

**Patentansprüche**

1. Verfahren zum Bestimmen des Verlustmomentes bei einem Drehmoment-Istwertrechner für Prüfstände, bei dem zur Bestimmung des mechanischen Wellendrehmomentes ($M_d$) einer mit einem Prüfling mechanisch gekuppelten Gleichstrommaschine die dem elektrischen Moment ($M_{EL}$), dem Beschleunigungsmoment ($M_o$) und dem Verlustmoment ($M_L + M_Z$) proportionalen Werte aus den Messgrössen für elektromotorische Kraft (EMK), Drehzahl (n) und Ankerstrom (I) der Maschine ermittelt und vorzeichenrichtig addiert werden, dadurch gekennzeichnet, dass bei einem Leerlaufversuch mittels des Istwertrechners zusammengehörige Wertepaare des Leerlaufverlustmomentes ($M_L$) und der Drehzahl (n) ermittelt und gespeichert werden und dass aus der Summe des Leerlaufverlustmomentes ($M_L$) und eines als Funktion der Drehzahl (n) bei vorgegebenem Strom ($I_n$) gespeicherten Zusatzverlustmomentes ($M_Z$) das Verlustmoment ($M_L + M_Z$) für jede Drehzahl (n) ermittelt wird, wobei zwischen abgespeicherten Werten liegende Werte durch Interpolation bestimmt werden.

2. Verfahren nach Anspruch 1, dadurch gekennzeichnet, dass zusammengehörige Werte von Zusatzverlustmoment ($M_Z$) und Drehzahl (n) bei Nennstrom (In) abgespeichert werden und bei einem vom Nennstrom abweichenden Strom (I) der Maschine das gespeicherte Zusatzmoment ($M_Z$) unter Berücksichtigung des Verhältnisses der Stromquadrate korrigiert wird.

3. Drehmoment-Istwertrechner für Prüfstände, mit dem das mechanische Wellendrehmoment ($M_d$) einer mit einem Prüfling mechanisch gekuppelten elektrischen Gleichstrommaschine durch Ermittlung des elektrischen Momentes ($M_{EL}$), des Beschleunigungsmomentes ($M_o$) und des Verlust-

momentes aus elektromotorischer Kraft EMK, Drehzahl (n) und Ankerstrom (I) der Maschine und durch vorzeichenrichtige Addition der einzelnen Momente berechenbar ist, zur Durchführung des Verfahrens nach Anspruch 1, dadurch gekennzeichnet, dass die mittels des mit einem Mikroprozessor (3) aufgebauten Istwertrechners bei einem Leerlaufversuch der Maschine bestimmten Wertepaare von Leerlaufverlustmoment ($M_L$) und Drehzahl (n) in einen ersten digitalen Speicher (35) des Istwertrechners eingebbar sind, dass in einem zweiten digitalen Speicher (34) zusammengehörige Werte von Zusatzverlustmoment ($M_Z$) und Drehzahl (n) bei vorgegebenem Strom ($I_n$) eingeschrieben sind und dass zur Bildung des Verlustmomentes ($M_L + M_Z$) die jeweils der gleichen Drehzahl zugeordneten Werte von Leerlaufverlustmoment ($M_L$) und Zusatzverlustmoment ($M_Z$) aus den Speichern (34, 35) auslesbar und addierbar sind.

## Claims

1. Method for determining the loss torque of a torque-measured value computer for test stands, in which for the purpose of defining the mechanical shaft torque ($M_d$) of a dc machine, mechanically coupled to a test specimen, the values proportional to the electrical torque ($M_{EL}$), the acceleration torque ($M_o$) and the loss torque ($M_L + M_Z$) are determined from the measured values of electromotive force (EMF) rotational speed (n) and armature current (I) of the machine and are added with the correct sign, characterised in that in the course of a no-load test, associated value pairs of the no-load loss torque ($M_L$) and of the rotational speed (n) are determined and stored by means of the measured value computer and that the loss torque ($M_L + M_Z$) for each rotational speed (n) is determined from the sum of the no-load loss torque ($M_L$) and a supplementary loss torque ($M_Z$), which is stored as a function of the rotational speed (n) at a given current ($I_n$) and values between stored values are defined by interpolation.

2. Method according to Claim 1, characterised in that associated values of supplementary torque ($M_Z$) and rotational speed (n) are stored and in the event of the current (I) of the machine deviating from the nominal current, the stored supplementary torque ($M_Z$) is corrected with reference to the ratio of the squared current values.

3. Torque measured-value computer for test stands, in which the mechanical shaft torque ($M_d$) of an electrical dc machine, mechanically coupled with the specimen under test, can be calculated by determining the electrical torque ($M_{EL}$), the acceleration torque ($M_o$) and the loss torque from the electromotor force (EMF), the rotational speed (n) and the armature current (I) of the machine by addition of the individual torques with the correct sign to perform the method according to Claim 1, characterised in that the value pairs of no-load loss torque ($M_L$) and rotational speed (n) defined in a no-load test of the machine by a measured-value computer, constructed with a microprocessor (3) can be entered into a first digital memory (35) of the measured-value computer, that the associated values of supplementary loss torque ($M_Z$) and rotational speed (n) are entered into a second digital memory (34) and that the values of no-load loss torque ($M_L$) and supplementary loss torque ($M_Z$), each associated with the same rotational speed, can be read out from the memories (34, 35) and can be added for the purpose of forming the loss torque ($M_L + M_Z$).

## Revendications

1. Procédé pour déterminer le couple de perte dans un calculateur de la valeur instantanée d'un couple de rotation, pour des bancs d'essai, dans lequel, pour déterminer le couple mécanique de rotation de l'arbre ($M_d$) d'une machine à courant continu accouplée directement avec l'objet à tester, on détermine, à partir des grandeurs de mesure pour la force électromotrice (EMK), la vitesse de rotation (n) et le courant (I) de la machine, les valeurs proportionnelles au moment électrique ($M_{EL}$), le couple d'accélération ($M_o$) et le couple de perte ($M_L + M_Z$) que l'on additionne en tenant compte des signes, caractérisé par le fait que lors d'un essai en marche à vide et à l'aide du calculateur des valeurs instantanées, on détermine et on mémorise des paires de valeurs associées du couple de perte en marche à vide ($M_L$) et de la vitesse de rotation (n), et qu'à partir de la somme du couple de perte en marche à vide ($M_L$) et d'un couple de perte supplémentaire ($M_Z$) mémorisé en tant que fonction de la vitesse de rotation (n) pour un courant ($I_n$) prédéterminé, on détermine le couple de perte ($M_L + M_Z$) pour chaque vitesse de rotation, les valeurs qui se situent entre des valeurs mémorisées étant déterminées par interpolation.

2. Procédé selon la revendication 1, caractérisé par le fait que les valeurs associées du moment de perte supplémentaire ($M_Z$) et de la vitesse de rotation (n) pour le courant nominal (In), sont mémorisées et que pour un courant (I) de la machine, qui présente un écart par rapport au courant nominal, le couple supplémentaire ($M_Z$) est corrigé en tenant compte du rapport entre les carrés des courants.

3. Calculateur de valeur instantanée du couple de rotation pour des bancs d'essai, avec lequel on peut déterminer le couple de rotation mécanique de l'arbre ($M_d$) d'une machine électrique à courant continu accouplée mécaniquement à un objet à tester, par détermination du moment électrique ($M_{EL}$), du couple d'accélération ($M_o$) et du couple de perte, à partir de la force électromotrice EMK, de la vitesse de rotation (n) et du courant d'induit (I) de la machine et par l'addition, en tenant compte des signes, des différents couples, pour la mise en œuvre du procédé selon la revendication 1, caractérisé par le fait que les paires de valeurs du couple de perte en marche à vide ($M_L$) et de la vitesse de rotation (n), qui ont été déterminées, lors d'un essai en marche à vide de la machine, à l'aide du calculateur de valeurs instantanées constitué au moyen d'un microprocesseur, sont susceptibles d'être introduites dans une première mémoire numérique (35) du calculateur de valeurs instantanées, que dans une seconde mémoire numérique (34) sont inscrites des valeurs associées du moment de perte supplémentaire ($M_Z$) et de la vitesse de rotation (n) pour un courant ($I_n$) prédéterminé, et que pour former le couple de perte ($M_L + M_Z$) les valeurs, associées à la même vitesse de rotation, du couple de perte à marche à vide ($M_L$) et du couple de perte supplémentaire ($M_Z$) sont susceptibles d'être extraites des mémoires (34, 35) et d'être additionnées.

FIG 1

FIG 2

FIG 3